(19) **Europäisches Patentamt / European Patent Office / Office européen des brevets**

(11) **EP 3 220 214 B1**

(12) **EUROPEAN PATENT SPECIFICATION**

(45) Date of publication and mention
of the grant of the patent:
**17.10.2018 Bulletin 2018/42**

(51) Int Cl.:
***G05B 11/42*** *(2006.01)* *G05B 13/02* *(2006.01)*

(21) Application number: **17160348.3**

(22) Date of filing: **10.03.2017**

(54) **CONTROL PARAMETER TUNING DEVICE AND CONTROL PARAMETER TUNING METHOD**

STEUERPARAMETERABSTIMMUNGSVORRICHTUNG UND
STEUERPARAMETERABSTIMMUNGSVERFAHREN

DISPOSITIF DE RÉGLAGE DE PARAMÈTRE DE COMMANDE ET PROCÉDÉ DE RÉGLAGE DE
PARAMÈTRE DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.03.2016 EP 16382113**

(43) Date of publication of application:
**20.09.2017 Bulletin 2017/38**

(73) Proprietor: **OMRON Corporation
Shiokoji-dori, Shimogyo-ku
Kyoto-shi
Kyoto 600-8530 (JP)**

(72) Inventors:
• **MORI, Yasumoto
Kyoto-shi, Kyoto 600-8530 (JP)**
• **EGI, Mamoru
Kyoto-shi, Kyoto 600-8530 (JP)**
• **SATO, Fumiaki
Kyoto-shi, Kyoto 600-8530 (JP)**
• **ARRATE UGIDOS, Aimar
08019 Barcelona (ES)**
• **LLIBRE TUR, Pere
08019 Barcelona (ES)**
• **HERAS VIAGA, Federico
08019 Barcelona (ES)**

(74) Representative: **Horn Kleimann Waitzhofer
Patentanwälte PartG mbB
Ganghoferstrasse 29a
80339 München (DE)**

(56) References cited:
**US-A- 5 153 807 US-A- 5 213 077**

**Description**

FIELD OF THE INVENTION

The present invention relates to a control device for tuning a servo motor and a corresponding method for tuning a servo motor.

BACKGROUND OF THE INVENTION

A servo motor for moving a load is controlled by a controller for controlling, using a drive current or control signal, the servo motor which drives a mechanical load. The controller and the servo motor are implemented as a closed loop system. The controller generates a control signal instructing the motor to move the mechanical load. The control signal applied depends on the motion application type (motor is moved to a desired position at a desired velocity, motor speed is varied, or the torque applied is varied). A feedback signal from the motor to the controller indicates the current actual state (e. g., position, velocity, etc.) of the motor and/or load. The feedback signal can be originated by an encoder or a resolver attached to the motor, by measuring the load position, or by estimation. The controller then compares the actual position of the load (feedback signal) with the instructed target position (control signal), and adjusts the newly calculated control signal as needed to minimize the differences between both signals (actual and target positions). This is continued until the target position is reached.

Thus, at the beginning of a movement, the motor/load accelerates/decelerates, i.e. changes speed, in order to reach the target position. Furthermore, the motor/load requires a so-called stabilization time which can be defined as the period of time required by the motor to reach a halt state of the motor/load after having arrived at the target position.

Further, in the controller, gain affects the accuracy (i.e. how close to the desired speed, or position is the motor's actual speed or position). A high gain will allow an accurate movement. In order that the motor will perform without excessive overshoot and settle within adequate time periods, the servo motor is tuned, which may include the tuning of the servo motor's proportional speed gain.

The controller may implement for example a PID filter for calculating the control signal that is applied to the motor. When tuning the servo motor, parameters of the PID filter are tuned. These parameters may include the proportional speed gain, a proportional position gain, a velocity control gain, the torque command filter and a position command filter. The proportional speed gain may be understood as the primary parameter. The responsiveness of the servo motor (stiff or soft) is determined by the proportional speed gain.

Early approaches for tuning the servor motor involved manual tuning by an operator who adjusted parameters while observing the effects of the adjustments on the actual system, i.e. the control loop including the servo motor. This was a very time-consuming and labor-intensive process.

In more advanced systems, feedback regarding the actual movement is obtained and compared to the expected movement of the servo motor. Deviations are then corrected by modifying gain parameters based on different rules.

United States Patent Application 5,153,807A discloses such a self-tuning controller apparatus, which uses fuzzy logic rules to map human knowledge in order to perform control parameter tuning based on characteristic variables.

However, with such a system, a large number of inference rules is needed in order to model complex systems. Moreover, the number of rules inference rules necessary may increase exponentially with the number of characteristic variables.

United States Patent 5,213,077 is an attempt to minimize this combinatorial explosion and reduce the number of inference rules. More specifically, this document discloses a gain adjusting device for a PID controller, in which a plurality of characteristic variables concerning the rotational speed are detected so as to be used for inference and the plurality of characteristic variables are divided into a plurality of sets. Groups of rules each indicating the relationship between the characteristic variables corresponding to each set and an amount of gain adjustment, as well as the relationship between the magnitude of the characteristic variable corresponding to each set and the degree of adoption of the amount of gain adjustment, are stored. The amount of gain adjustment for each set is inferred on the basis of the characteristic variables detected and each group of rules. On the basis of the result of inference of the amount of gain adjustment and the degree of adoption, an amount of gain to be adjusted is determined by calculating a weighted average value of the result of inference of the amount of gain adjustment with the degree of adoption set as the weight. This amount of gain to be adjusted is set in the PID controller.

However, in both of the above-noted patent documents, the effectiveness of the respective tuning approach depends on the quality of the inference rules. Moreover, it is difficult to obtain inference rules of high quality and to reduce them to a corresponding control program. Furthermore, the obtained inference rules may not cover all possible scenarios, so that there is a lack in versatility.

SUMMARY OF THE INVENTION

It is one object of the present invention to provide a device and method for tuning a servo motor in which the responsiveness of the servo motor is increased whilst the stabilization time is as low as possible while avoiding excessive overshoot. It is a related object of the present invention to provide such a device and method, which have high versatility and that do not depend on pre-defined inference rules.

Accordingly, a control device for tuning a servo motor in a plurality of tuning iterations is suggested. The control device comprises a calculation unit configured to determine a current proportional speed gain, which is a proportiona speed of a current tuning iteration of the servo motor and to calculate a stabilization time ratio based on a current stabilization time of the servo motor and a target stabilization time, a determination unit configured to select a gain determination process based on the calculated stabilization time ratio, and to determine a next proportional speed gain using the selected gain determination process, the next proportional speed gain being a (target) proportional speed gain of the next tuning iteration following the current tuning iteration, wherein the determination unit is configured to select a skip step gain determination process, in which the next proportional speed gain is determined by a first calculation rule and the determined current proportional speed gain, wherein the first calculation rule is dependent on the calculated stabilization time ratio, if the stabilization time ratio is equal to or greater than a predetermined reference value, and to select a one step gain determination process, in which the next proportional speed gain is determined by a second calculation rule and the determined current proportional speed gain, wherein the second calculation rule is independent of the calculated stabilization time ratio, if the stabilization time ratio is below the predetermined reference value.

The calculation unit may be further configured to update parameters of the servo motor according to the determined next proportional speed gain, and a control unit configured to generate a control signal for controlling the servo motor for driving a load based on the updated parameters.

As explained above, gain affects the accuracy of the servo motor. Thus, the gain, in particular the proportional speed gain of the servo motor, is responsible for how close the motor will come to the desired speed or position. A high gain will allow an accurate movement. Further parameters of the servo motor depend on the proportional speed gain and are determined accordingly.

Thus, in order to avoid overshoot of the motor, the proportional speed gain is adapted in a closed loop system provided by the control device. The control device may implement for example a PID filter for calculating the control signal that is applied to the motor. If the proportional speed gain $K_n$ is updated due to this closed loop system, the parameters which depend on $K_n$ will also be updated.

As the stabilization time should be reduced, a target stabilization time may be input to the control device, for example by a user input. The target stabilization time may define the time which is acceptable as the period of time required by the motor to reach a predetermined state, such as a halt state of the motor/load after having arrived at the target position. The target position is the position which should be reached by the motor/load according to a user input or control of the servo motor.

According to the herein described control device, the proportional speed gain, or more precisely, the next proportional speed gain, is calculated based on a stabilization time ratio. The stabilization time ratio defines how far away the current stabilization time is from the target stabilization time. Depending on that, a gain determination process is selected. According to the gain determination process, the next proportional speed gain $K_{n+1}$ of the next tuning iteration is calculated.

Afterwards, the parameters depending on $K_n$ may then be updated according to $K_{n+1}$. The updated parameters, including the next proportional speed gain, are included into (i.e. determine) a control signal. The control unit then sends the control signal to the motor for continuing the movement according to the updated parameters.

It should be noted that, in the following, the terms motor and servo motor are used synonymously. Further, a movement of the load includes a movement of the motor and vice versa.

In one embodiment, the determination unit is configured to determine the next proportional speed gain ($K_{n+1}$) in the skip step gain determination process as:

$$K_{n+1} = K_n \times 2\chi\sqrt{\frac{S_n}{S_{\text{target}}}}$$

where $K_n$ is the current proportional speed gain,
$S_n$ is the current stabilization time,
$S_{\text{target}}$ is the target stabilization time, and
$\chi$ is a constant.

This makes it possible to reduce the number of iterations necessary for the tuning process to minimize the stabilation time and overshoot.

According to another embodiment, the calculation unit is adapted to initially determine the current proportional speed gain as a fixed initial proportional speed gain based on a user input.

At the beginning, the control device does not have any information with respect to the current proportional speed gain. The initial value of the proportional speed gain, i.e. the value for starting the tuning, is set to a fixed and low value. In the first iteration, i.e. after the stabilization time ratio is calculated for the first time, the proportional speed gain is updated.

According to a further embodiment, the control device comprises a graphical user interface for receiving the user input. The graphical user interface may also provide the possibility to start the whole tuning mechanism and/or to input further parameters like the target stabilization time.

According to a further embodiment, the calculation unit is adapted to initially determine the current proportional speed gain based on an inertia estimation of the servo motor.

The inertia estimation and the calculation of the current proportional speed gain may be done in the drive control of the servo motor and may be provided to the control device.

The user may choose whether the calculation unit receives the initial proportional speed gain from a user input via the graphical user interface or whether the calculation unit receives the initial proportional speed gain based on an inertia estimation of the servo motor. Both embodiments may also be combined.

According to a further embodiment, the control device further comprises a detection unit configured to detect whether vibrations affect the servo motor and/or the load and to send a signal to the servo motor for eliminating the detected vibrations.

Vibrations or other abnormal activities of the motor and/or load may occur during the movement of the motor and/or load. Such vibrations or resonances may happen at some point during the movement and may be present during the calculation of the next proportional speed gain by the determination unit. In order to detect vibrations, the detection unit may monitor the servo motor.

According to a further embodiment, the detection unit is configured to detect a vibration if a deviation of the motor speed between a motor speed command and a motor speed feedback is larger than an acceptable criterion (i.e. larger than a predetermined value).

The detection unit may determine whether there are any vibrations based on the motor speed command and the motor speed feedback, If the difference between these values is larger than a predefined value, the detection may take this to indicate vibrations.

In addition, it is also possible for the detection unit to determine whether there are any vibrations based on the torque command value which is calculated from the speed deviation between the motor speed command and the motor speed feedback. When using the torque command value, an acceptable criterion may be given as % of rated torque of the motor. For example the acceptable criterion may be 3% of rated torque of the motor.

According to a further embodiment, the detection unit is configured to detect a vibration if the occurrence number of the zero-cross for the deviation of motor speed is within an acceptable (predetermined) range.

In this embodiment, vibrations may be detected by monitoring zero-crossings of the deviation of the motor speed.

In addition, it is also possible for the detection unit to detect a vibration if the occurrence numbers of the zero-cross of the torque command value, which is calculated from the speed deviation between the motor speed command and the motor speed feedback, is within an predetermined range.

According to a further embodiment, the detection unit is configured to compare the current proportional speed gain and the next proportional speed gain.

If vibrations are detected, the detection unit may confirm whether these vibrations can be eliminated by applying filters by comparing the current proportional speed gain and the next proportional speed gain. The current proportional speed gain may be directly derived from the motor. If the current proportional speed gain is larger than the newly calculated next proportional speed gain, the detection unit can confirm that there are vibrations and send a signal to the motor for eliminating these vibrations. The elimination may be done directly in the motor by applying for example a filter to remove resonances in the control signal.

According to a further embodiment, if the current proportional speed gain is larger than the next proportional speed gain, the detection unit is configured to send a signal to the control unit to generate the control signal based on the previous parameters in case of detected vibrations.

As long as the vibrations are not eliminated, the detection unit may instruct the control unit to use the previous parameters, i.e. not the updated parameters, for the generation of the control signal or abort the tuning process after a predetermined number of iterations, and to indicate the failure of the operation according to the user input.

According to a further embodiment, the detection unit is configured to send a signal to the determination unit to determine the next proportional speed gain after the detected vibrations are eliminated.

After the vibrations are eliminated, the detection unit may send a signal to the determination unit for continuing the determination of the next proportional speed gain and update of the further parameters.

According to a further embodiment, the calculation unit is configured to calculate the stabilization time ratio as the quotient between the current stabilization time and the target stabilization time.

According to a further embodiment, the calculation unit, the determination unit and the control unit are configured to repeat their functions until the current stabilization time is equal to or lower than the target stabilization time.

If the stabilization time ratio is equal to one or less than one, the target stabilization time has been reached and the acceptance criteria for the movement of the motor/load have been reached. At this point, the tuning of the servo motor will be ended.

The determination unit is configured to apply a skip step gain determination process as the selected gain determination process if the stabilization time ratio is above a predetermined reference value.

Thus, when the current stabilization time is still relatively far from the stabilization time ratio, the determination unit applies the skip step gain determination process. The skip step gain determination process results in a large increase of the proportional speed gain.

The predetermined reference value may be for example $\alpha^{2\chi}$. $\alpha$ may be a predefined coefficient which can be set according to the used servo motor and the characteristics of the used servo motor. $\chi$ may be considered as a "tuning" factor for the skip step gain determination process. In order to prevent an excessive gain operation by determining a large stabilization time ratio resulting in a large proportional speed gain change, $\chi$ may be set accordingly, for example to 2 or about 2.

The determination unit is configured to apply a one step gain determination process as the selected gain determination process if the stabilization time ratio is below a predetermined reference value.

When the stabilization time is close to the target stabilization time, the determination unit applies a one step gain determination process which results in a smaller increase of the proportional speed gain than when the skip step gain determination process is applied.

The predetermined reference value is the same as for the skip step gain determination process, and may be for example $\alpha^{2\chi}$.

According to a further embodiment, the one step gain determination process defines that the next proportional speed gain is calculated as a function independent on the stabilization time ratio.

According to a further embodiment, the determination unit is configured to compare the next proportional speed gain of the one step gain determination process and the next proportional speed gain of the skip step gain determination process, and, if the next proportional speed gain of the one step gain determination process is larger than the next proportional speed gain of the skip step gain determination process, the determination unit is configured to use the next proportional speed gain of the one step gain determination process.

In addition to the determination of the next proportional speed gain based on the selected gain determination process, the determination unit provides a safety feature. The determination unit calculates the next proportional speed gain of the one step gain determination process and the next proportional speed gain of the skip step gain determination process and compares the two results. If the determination unit has selected the skip step gain determination process but the next proportional speed gain according to the one step gain determination process is larger than the next proportional speed gain according to the skip step gain determination process, the determination unit is configured to override the first result of the next proportional speed gain and use next proportional speed gain according to the one step gain determination process. In this way, it can be avoided that the skip step gain determination process is used although the one step gain determination process would be more suitable.

According to a further embodiment, the parameters are at least one of a proportional position gain, a velocity control gain, a torque command filter and a position command filter.

These and other parameters which are necessary for the control and function of the servo motor depend on the proportional speed gain. Thus, when updating the proportional speed gain, these parameters can be updated accordingly and can be used for the further movement of the motor.

According to a further aspect, the invention relates to a method for tuning a servo motor. The method comprises the following steps:

determining a current proportional speed gain, which is a proportional speed gain of a current tuning iteration of the servo motor,

calculating a stabilization time ratio based on a current stabilization time of the servo motor and a target stabilization time,

selecting a gain determination process based on the calculated stabilization time ratio,

determining a next proportional speed gain using the selected gain determination process, the next proportional speed gain being a proportional speed gain of the next tuning iteration following the current tuning iteration,

wherein in the selecting step, a skip step gain determination process, in which the next proportional speed gain is determined by a first calculation rule and the determined current proportional speed gain, wherein the first calculation rule is dependent on the calculated stabilization time ratio, is selected if the stabilization time ratio is equal to or greater than the predetermined reference value, and one step gain determination process, in which the next proportional speed gain is determined by a second calculation rule and the determined current proportional speed gain, wherein the second calculation rule is independent of the calculated stabilization time ratio, is selected if the stabilization time ratio is below a predetermined reference value.

The embodiments and features described with reference to the device of the present invention can be applied mutatis mutandis to the method of the present invention.

According to a further aspect, the invention relates to a computer program product comprising a program code for executing the above-described method for tuning a servo motor when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

BRIEF DESCRIPTION OF THE DRAWINGS

Further embodiments, features and advantages of the present invention will become apparent from the subsequent description and dependent claims, taken in conjunction with the accompanying drawings, in which:

Fig. 1 shows a servo motor system comprising a servo motor and a control device for tuning and controlling the servo motor;
Fig. 2 shows the relationship between the proportional speed gain and the stabilization time of the servo motor system of Fig. 1;
Fig. 3 shows an example of a configuration of the control device;
Fig. 4 shows a first example of a method for tuning a servo motor; and
Fig. 5 shows a second example of a method for tuning a servo motor.

In the Figures, like reference numerals designate like or functionally equivalent elements, unless otherwise indicated.

EMBODIMENTS OF THE INVENTION

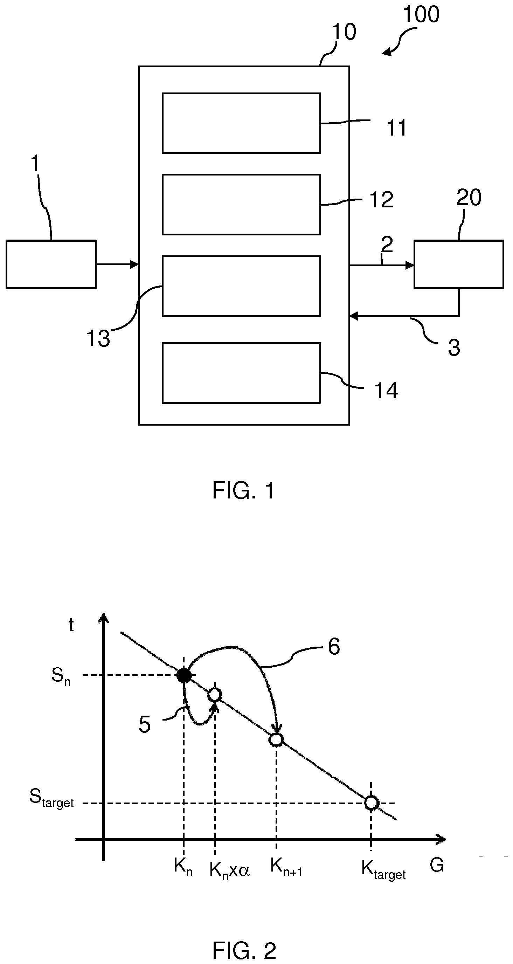

Fig. 1 shows a servo motor system 100 comprising a servo motor 20 and a control device 10 for tuning and controlling the servo motor 20.

During the tuning of the servo motor 20, various parameters, such as proportional and integral gain values or cutoff frequency for command filters are determined. The determined parameters are then used for the control of the servo motor.

The tuning of the servo motor 20 is performed iteratively. More specfically, at every tuning iteration, the servo motor 20 is brought from an initial state to a target state. The initial state may be a rest state in which the servo motor 20 rests at a predetermined initial position or a state in which the servo motor 20 moves at a predetermined initial angular velocity. The target state may be a rest state in which the servo motor 20 rests at a predetermined target position or a state in which the servo motor 20 moves at a predetermined target angular velocity. The time period that it takes to bring the servo motor 20 from the intial state to the target state may be referred to as "stabilization time". That is to say, the beginning of the stabilization time may be defined as the time when the servo motor 20 leaves the initial state, or alternatively, the time when the control device 10 receives as a command signal for controlling the servo motor 20 to bring it into the target state. Moreover, the end of the stabilization time may be defined as the time when the servo motor 20 has reached a steady target state, in particular after any overshooting has been compensated.

The control device 10 can receive a user input 1, which can be input via a graphical user interface. The user input 1 can comprise information with respect to a movement of the servo motor 20, which can move a load (not shown). In order to control and tune the servo motor 20, the control device 10 sends a control signal 2 to the servo motor 20. On the other hand, the servo motor 20 sends a feedback signal 3 to the control device 10. The control device 10 can use the feedback signal 3 for further control of the servo motor 20 and also for tuning the servo motor 20.

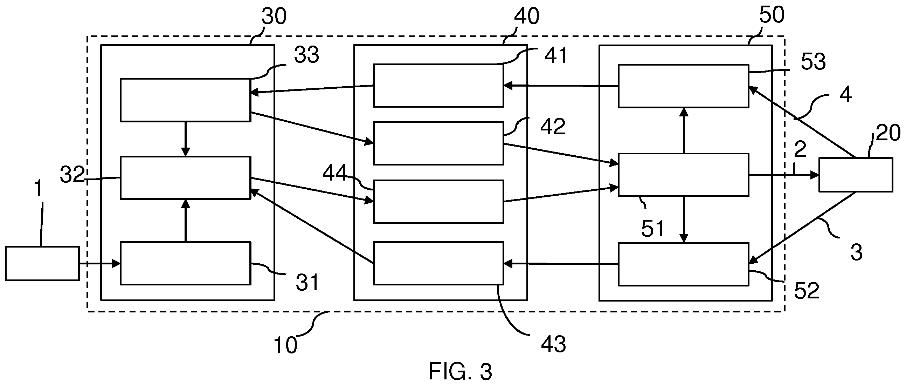

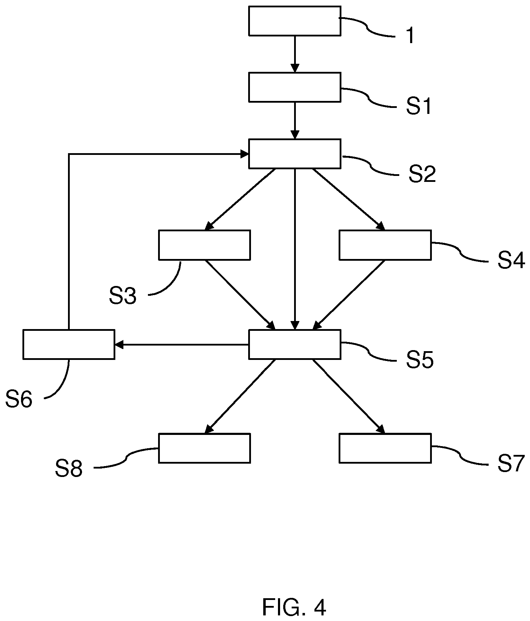

The control device 10 comprises a calculation unit 11, a determination unit 12, a control unit 13 and a detection unit 14. The features and functions of these units will be described briefly in the following and in further detail with reference to the Figs. 3 and 4.

The calculation unit 11 determines a current proportional speed gain $K_n$ of the servo motor 20, for example based on the feedback signal 3, and calculates a stabilization time ratio $S_n/S_{target}$ based on a current stabilization time $S_n$ of the servo motor 20 and a target stabilization time $S_{target}$. It should be noted that the current proportional speed gain $K_n$ is the proportional speed gain of the current iteration of the tuning process. Similarly, the current stabilization time $S_n$ is the stabilization time of the current iteration of the tuning process.

After that, the determination unit 12 selects a gain determination process based on the calculated stabilization time ratio. The selected gain determination process is then used for determining the next proportional speed gain $K_{n+1}$. The next proportional speed gain is a proportional speed gain of the next tuning iteration that follows the current tuning iteration. The gain determination process may be either a skip step gain determination process or a one step gain determination process.

In the one step gain determination process, the next proportional speed gain $K_{n+1}$ is determined by multiplying the current proportional speed gain with a predetermined parameter $\alpha$ to improve the responsiveness of the servo motor 20, or in other words: $K_{n+1} = \alpha K_n$. The parameter $\alpha$ may be set according to a user input. If the value of $\alpha$ is changed to a smaller value, the gain can be adjusted finely but the number of necessary iterations is increased.

In the skip step gain determination process, the next proportional speed gain $K_{n+1}$ is based on the calculation from the current stabilization time (which can be measured) and the target stabilization time. The increase of the proportional speed gain is typically higher when using the skip step gain determination process compared to the one step gain determination process.

After the determination unit 12 has determined the next proportional speed gain, the calculation unit 11 updates further parameters of the servo motor, for example a proportional position gain, a velocity control gain, a torque command filter and a position command filter. These parameters depend on the proportional speed gain and can therefore be updated accordingly. For example, in one posible implementation, these parameters may be updated by being calculated according to functions (equations) that are dependent on the proportional speed gain, and the resulting updated parameters may be stored in a memory with which the control device 10 is provided.

Afterwards, the control unit 13 generates the control signal 2 including or based on the updated parameters.

The calculation unit 11, the determination unit 12 and the control unit 13 continue their respective functions, i.e. implement a closed loop control, until the target stabilization time is reached.

During the closed loop control, the detection unit 14 monitors the servo motor 20 in order to detect any vibrations which may affect the determination of the next proportional speed gain. If such vibrations are detected, the detection unit 14 can interrupt the determination unit 12 and inform the servo motor 20 to eliminate the vibrations. If no more vibrations are detected, the detection unit 14 sends a signal to the determination unit 12 to continue with the determination of the next proportional speed gain.

An examplary relationship between the stabilization time (vertical axis) and the proportional speed gain (G, horizontal axis) is illustrated in Fig. 2. It should be noted that both the vertical axis and the horizontal axis are on logarithmic scales.

In this example, a high stabilization time is related to a low proportional speed gain. On the other hand, a low stabilization time is related to a high proportional speed gain.

At the beginning of the tuning process, the measured stabilization time $S_n$ is high. The current proportional speed gain $K_n$ is low. Starting from this, when the next proportional speed gain $K_{n+1}$ would be calculated by the one step gain determination process (reference sign 5), the increase of the proportional speed gain is lower than when the next proportional speed gain $K_{n+1}$ is calculated by the skip step gain determination process (reference sign 6). At the beginning of the tuning process, it is thus appropriate to increase the proportional speed gain by the skip step process, as described above. If the measured stabilization time $S_n$ comes closer to the target stabilization time $S_{target}$, the next proportional speed gain will be determined by the one step gain determination process. Thus, at the beginning, a high increase of the proportional speed gain will occur and later, towards the end of the tuning process, the increase will only be in smaller steps to accurately arrive at an estimated optimal proportional speed gain $K_{target}$, which corresponds to the target stabilization time $S_{target}$.

The slope of the graph in Fig. 2 is $-\chi$. Thus, it can be seen that, due to the logarithmic scaling of the axes in Fig. 2, there is the following relationship between stabilization time S and gain K:

$$S \propto K^{-\chi} \qquad\qquad (\text{Eq. } 1)$$

In other words, the product of S and Kx is approximately constant, so that the following equation is given:

$$S_n K_n^{\chi} = S_{\text{target}} K_{\text{target}}^{\chi} \qquad\qquad (\text{Eq. } 2)$$

where $S_{target}$ is the target stabilization time and $K_{target}$ is the target gain. Accordingly, if the value of X is known, then the optimal target gain $K_{target}$ can be calculated as:

$$K_{target} = K_n \cdot \sqrt[\chi]{\frac{S_n}{S_{target}}} \qquad (Eq.\ 3)$$

Now, ordinarily the value of X is not known, or at least not known exactly. However, it is possible to estimate the value of X, and thus to estimate the target gain $K_{target}$ based on this estimation.

However, if the estimated target gain $K_{target}$ as calculated with Equation 2 is applied for the next gain $K_{n+1}$ of the next iteration, the gain may be changed too much. It has been found that a quicker approximation to a suitable gain can be attained if the next gain $K_{n+1}$ is set to a gain that is between (e.g. halfway or two-thirds on the logarithmic horizontal axis in Fig. 2) the current gain $K_n$ and the estimated target gain $K_{target}$. Let us assume that the next gain $K_{n+1}$ is set to a gain that is halfway between the current gain $K_n$ and the estimated target gain $K_{target}$. In that case, the next gain $K_{n+1}$ can be calculated as follows:

$$\log K_{n+1} = \frac{\log K_n + \log K_{target}}{2}$$

$$K_{n+1} = \sqrt{K_n \cdot K_{target}} = K_n \sqrt[2\chi]{\frac{S_n}{S_{target}}} \qquad (Eq.\ 4)$$

When starting with a comparatively low initial gain, then a faster approximation of a suitable gain can be achieved if the next gain $K_{n+1}$ of the next iteration is calculated in this manner, than if it is always calculated by the one step gain determination process. Now, as can be seen from the above considerations, the gain change rate (i.e. $K_{n+1} - K_n$) of the skip step gain determination process is larger than that of the one step gain determination process if the following condition is fulfilled:

$$\sqrt[2\chi]{\frac{S_n}{S_{target}}} > \alpha$$

$$\frac{S_n}{S_{target}} > \alpha^{2\chi} \qquad (Eq.\ 5)$$

Accordingly, the next gain $K_{n+1}$ is preferably set to the value calculated by the skip step determination process if the stabilization time ratio is larger than $\alpha^{2X}$ (predetermined reference value), and otherwise it is set to the value calculated by the one step determination process. In other words, for relatively higher stabilization times and lower gains (left side in Fig. 2), the skip step gain determination process is employed, and for relatively lower stabilization times and higher gains (left side in Fig. 2), the one step gain determination process is employed (right side in Fig. 2).

After determining the next proportional speed gain $K_{n+1}$, the control device 10 updates the control parameters for controlling the servo motor 20 based on the determined next proportional speed gain $K_{n+1}$. The control parameters may be stored in a storage area of the control device 10, for example. During the next iteration, the control unit 13 controls the servo motor 20 using the updated control parameters.

The tuning process is continued, that is, the tuning iterations are repeated in this manner until the measured current stabilization time $S_n$ is equal to or lower than the target stabilization time $S_{target}$. Thus, the tuning is completed and the parameters that were updated based on the last determined proportional speed gain are then used for the further control of the motor 20.

The target stabilization time $S_{target}$, the gain increase parameter $\alpha$ and the slope parameter X can be entered by user input, but needless to say, they can also be obtained by other means, for example set as constant values in advance, read out from a memory or calculated from other parameters.

For example, if the gain increase parameter $\alpha$ is set to 1.2, then the proportional speed gain will approximately double after four iterations. Fewer iterations are necessary if $\alpha$ is set to 2. Similarly, also the slope parameter X can be set in advance, so that only the target stabilization time is entered as user input.

Furthermore, also the initial proportional speed gain $K_1$ that is used for the first iteration may be a value that is determined by user input or that is set in advance or the like. Alternatively, the initial proportional speed gain $K_1$ of the first iteration may be determined based on an inertia estimation of the servo motor 20.

To summarize, in the skip step determination process, the next gain $K_{n+1}$ is determined by a first calculation rule, for example as given in Equation 4 already noted above:

$$K_{n+1} = K_n {}^{2\chi}\sqrt{\frac{S_n}{S_{\text{target}}}} \qquad (\text{Eq. 4})$$

Once the gain is sufficiently close to a target range as defined by the desired target stabilization time, the next gain $K_{n+1}$ is determined by a second calculation rule, for example as given by the following Equation 6:

$$K_{n+1} = \alpha \times K_n \qquad (\text{Eq. 6})$$

The first calculation rule is applied in a range from the initial gain to up to a predetermined reference value (e.g. $\alpha^2 X$), whereas the second calculation rule is applied in a range where the gain is equal to or greater than the predetermined reference value, and at least up to a region of gains where the target stabilization time is met. The first and the second calculation rules are chosen such that, in the respective ranges in which they are applied, the gain change rate ($K_{n+1}$ - $K_n$) of the first calculation rule is larger than the gain change rate ($K_{n+1}$ - $K_n$) of the first calculation rule. This is achieved by taking into account the stabilization time ratio, which gives an indication of how far away the gain is from a suitable gain. That is, the first calculation rule is dependent of and takes into account the stabilization time ratio, whereas the second calculation rule is independent of and does not take into account the stabilization time ratio. In other words, with the first calculation rule, the next gain is a function of the stabilization time ratio whereas with the second calculation ratio, the next gain is not a function of the stabilization time ratio. Accordingly, a suitable gain can be approached faster than if the second calculation rule where applied for the entire tuning process.

With the control device and control method according to the above-described embodiment, the number of iterations necessary for the tuning process is reduced and it is possible to minimize the stabilation time and overshoot. Furthermore, it is sufficient to set only a single parameter, and it becomes unnecessary to manually perform the setting of numerous parameters while observing the effects on the actual system. Thus, the control device has high versatility and can be used in a wide range of situations. Moreover, since it is not necessary to manually adjust any parameters after the initial parameters have been set, it is possible to achieve quick auto-tuning of the motor without human intervention. Furthermore, the proposed control device and control method are very flexible, because they can be applied to a wide variety of tuning equations. Accordingly, they can be applied with great versatility even by operators without specialized knowledge. By contrast, conventional solutions require dedicated rules and dedicated programming that only a highly skilled operator can apply.

Moreover, with the control device and control method according to the above-described embodiment, it is sufficient to establish only two calculation rules. Accordingly, implementation is much easier than in conventional devices and methods that required complicated heuristics including a large number of rules.

It should be noted that, strictly speaking, the stablization time - gain curve shown in Fig. 2 does not continue infinitely with the stabilization time decreasing as the gain increases. Rather, at some point to the right of the curve shown in Fig. 2, a minimal stabilization time will be reached, beyond which the stabilization time will rise again with increasing gain, or the system may become instable with further increasing gain. Accordingly, if the target stabilization time $S_{\text{target}}$ is chosen such that it is larger than the minimal stabilization time, then there will be a certain range of acceptable gain values, for which the stabilization time is not greater than the $S_{\text{target}}$. Rather than trying to determine the gain with the minimum stabilization time, the control device and control method according to the above-described embodiment determine a suitable gain at which the stabilization time that is not greater than the target stabilization time $S_{\text{target}}$. This is achieved by approaching the range of suitable gains from the left in Fig. 2 in the manner described above.

Fig. 3 shows a logical configuration of the control device 10. The control device 10 comprises three logical sections, a configuration section 30, a drive parameter section 40 and a drive function section 50. All three sections are implemented by the units of Fig. 1.

In the configuration section 30, a user input 1 is processed to extract tuning criteria 31. These tuning criteria may define for example the target stabilization time. First updated parameters 32 depending on the proportional speed gain are generated based on the tuning criteria 31 and second updated parameters 33 of the load or servo motor 20.

In the drive parameter section 40, which refers to the parameters being used for driving the servo motor 20, a load characteristic estimation result 41 (i.e., information about the load being moved by the servo motor 20) is forwarded to the configuration section 30 for generating second updated parameters 33 of the load or servo motor 20. The drive parameter section also receives the second updated parameters 33 of the load or servo motor 20 to be able to forward load characteristic parameters 42 to the drive function section 50.

Further, the drive parameter section 40 receives a tuning measurement 52 from the drive function section 50 and forwards this information 43 for example as stabilization time or overshoot information to the configuration section 30 for generating the first updated parameters 32 depending on the proportional speed gain. The first updated parameters 32 are received by the drive parameter section 40 for forwarding current gain parameters 44 to the drive function section 50.

The drive function section 50 communicates directly with the servo motor 20 and receives a motor speed 4 as well as the feedback value 3 including information of the proportional speed gain and the stabilization time. A motor control function 51 receives the current gain parameters 44 as well as the load characteristic parameters 42 and generates a control signal 2 for controlling the servo motor 20.

In addition, the motor control function 51, which can be a physical motor control unit being integrated into the control device 10, generates a command value for initiating a measurement of the tuning parameters 52 as well as a command value for estimating the load characteristics 53. This information is sent to the drive parameter section 40.

The control device 10 as described with reference to Fig. 1 implements in particular the functions of the logical drive function section 50.

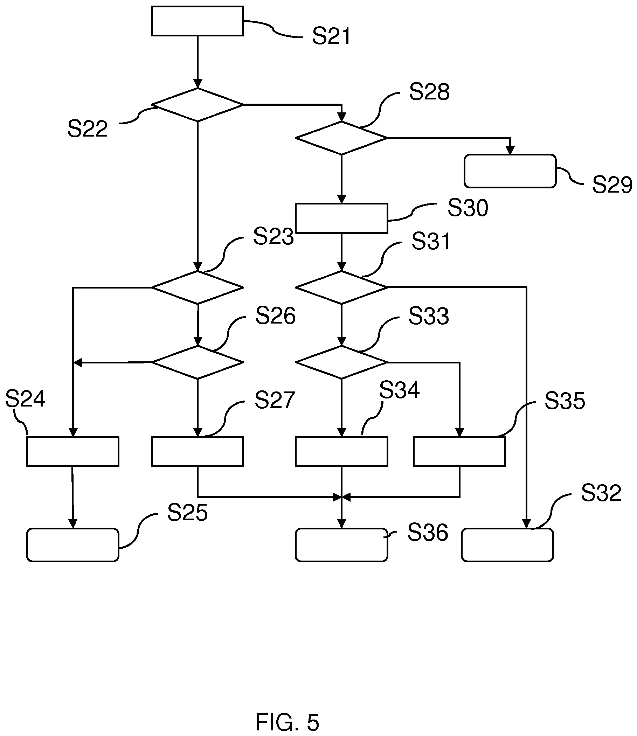

The functions and features of the control device 10 will now be described in greater detail with respect to Figs. 4 and 5.

Fig. 4 shows a first example of a method for tuning a servo motor 20.

At the beginning, a user input 1 is received. The user input 1 can include information about the movement of the servo motor 20 and may also include tuning information like a target stabilization time.

In step S1, an inertia of the servo motor 20 can be estimated. This step is only optional and can also be omitted.

In step S2, measurements of parameters are performed and the next proportional speed gain is determined based on these measurements. Thus, in step S2, the calculation unit 11 determines the current proportional speed gain $K_n$ of the servo motor 20, determines the current stabilization time ratio and calculates the stabilization time ratio based on the current stabilization time and the target stabilization time.

Further, in step S2, the determination unit 12 selects either the one step gain determination process or the skip step gain determination process based on the calculated stabilization time ratio as described above. The selected gain determination process is then used for determining the next proportional speed gain Kn+i.

In the meantime, resonances and damping are detected and, when present, removed or eliminated in steps S3 and S4. Although S3 and S4 are shown as following step S2, these steps are carried out simultaneously as described above.

In step S5, it will be checked whether the target stabilization time is fulfilled. If there are failures, a failure signal will be output in step S7. This may be the case for example due to measurement failures. In such a case, the method can start again as step S1. It is also possible that the target stabilization time is varied in this case, either automatically or due to renewed user input.

If the target stabilization time is not yet reached, the proportional speed gain and the dependent parameters are updated in step S6 and the method continues with the next measurement in step S2.

If the target stabilization time is reached, the method will end in step S8 with a success.

Fig. 5 shows a second example of a method for tuning a servo motor 20. In step S21, the method is started. In step S22, it is decided whether vibrations are detected. This step may be carried out simultaneously to the steps S2 to S6 of Fig. 4.

If there are vibrations, the detection unit 14 confirms whether these vibrations can be eliminated using filters by comparing the current proportional speed gain and the newly determined next proportional speed gain in step S23.

If the current proportional speed gain is larger than the newly determined next proportional speed gain, the vibrations are not eliminated and the parameters are restored in step S24, i.e. the previous parameters are used. The method is then aborted in step S25 and the measurements can start again.

If the current proportional speed gain is smaller than the newly determined next proportional speed gain, the vibrations are confirmed. Afterwards, it is checked in step S26 if the notch of the servo motor is adopted.

If no, steps S24 and S25 are carried out.

If the notch is adopted, the detection unit 14 disables the skip step gain determination process in step S27, which means that only the one step gain determination process can be used.

Then, the method ends in step S36 and starts again.

If there are no vibrations detected in step S22, the detection unit 14 checks whether a damping setting is called in step S28. If a damping setting is called, the servo motor 20 is instructed to reduce damping. If the damping setting is called, the damping setting is carried out in step S29. Afterwards, the method can start again.

If no damping setting is called, the calculation unit 11 notes, i.e. receives or measures, the current parameters of the servo motor 20 including the stabilization time in step S30.

In step S31, it is checked whether the current stabilization time is less or equal to the target stabilization time.

If this is fulfilled, the method ends in step S32 with a success.

If this is not fulfilled, it is checked whether the skip step gain determination process is enabled in step S33.

If the skip step gain determination process is disabled, for example in step S27, the next proportional speed gain is determined using the one step gain determination process in step S35, which is described above.

If the skip step gain determination process is enabled, the next proportional speed gain is determined using the skip step gain determination process in step S34, which is described above.

After determining the next proportional speed gain in step S34 or S35, the parameters are updated, the control signal is generated and the method starts again (S36).

In summary, the described control device 10 provides the possibility to determine the proportional speed gain dependent on the stabilization time ratio so that the servo motor can be controlled based on the stabilization time ratio. Thus, the stabilization time can be reduced as far as possible while, at the same time, overshoot and resonances of the servo motor 20 can be eliminated or at least reduced.

Although the present invention has been described in accordance with preferred embodiments, it is obvious for the person skilled in the art that modifications are possible in all embodiments.

REFERENCE NUMERALS

| | |
|---|---|
| 1 | User input |
| 2 | Control signal |
| 3, 4 | Feedback signals |
| 5 | Gain raise by one step |
| 6 | Gain raise by skip step |
| 10 | Control device |
| 11 | Calculation unit |
| 12 | Determination unit |
| 13 | Control unit |
| 14 | Detection unit |
| 20 | Servo motor |
| 30 | Configuration section |
| 31 - 33 | Features of the configuration section |
| 40 | Drive parameter section |
| 41 - 44 | Features of the drive parameter section |
| 50 | Drive function section |
| 51 - 53 | Features of the drive function section |
| 100 | Servo motor |
| $K_n$ | Current proportional speed gain (gain of the n-th iteration) |
| $K_{n+1}$ | Next proportional speed gain (skip step) |
| $K_{target}$ | Estimated optimal stabilization time |
| $S_n$ | Measured stabilization time |
| $S_{target}$ | Target stabilization time |
| S1 - S8 | Method steps |
| S21 - S36 | Method steps |

**Claims**

1. A control device (10) for tuning a servo motor (20) in a plurality of tuning iterations, the control device (10) comprising:

   a calculation unit (11) configured to determine a current proportional speed gain ($K_n$), which is a proportional speed gain of a current tuning iteration of the servo motor (20), and to calculate a stabilization time ratio based on a current stabilization time ($S_n$) of the servo motor (20) and a target stabilization time (Starget),
   a determination unit (12) configured to select a gain determination process based on the calculated stabilization time ratio, and to determine a next proportional speed gain ($K_{n+1}$) using the selected gain determination process, the next proportional speed gain being a proportional speed gain of the next tuning iteration following the current tuning iteration,
**characterized in that**
the determination unit (12) is configured:

to select a skip step gain determination process, in which the next proportional speed gain is determined by a first calculation rule and the determined current proportional speed gain, wherein the first calculation rule is dependent on the calculated stabilization time ratio, if the stabilization time ratio is equal to or greater than a predetermined reference value, and

to select a one step gain determination process, in which the next proportional speed gain is determined by a second calculation rule and the determined current proportional speed gain, wherein the second calculation rule is independent of the calculated stabilization time ratio, if the stabilization time ratio is below the predetermined reference value.

2. The control device (10) according to claim 1, wherein the calculation unit (11) is further configured to update parameters of the servo motor (20) according to the determined next proportional speed gain, and
the control device (10) further comprises a control unit (13) configured to generate a control signal (2) for controlling the servo motor (20) for driving a load based on the updated parameters in the next tuning iteration.

3. The control device (10) according to claim 1 or 2, wherein the determination unit (12) is configured to determine the next proportional speed gain ($K_{n+1}$) in the skip step gain determination process as:

$$K_{n+1} = K_n \times \sqrt[2\chi]{\frac{S_n}{S_{\text{target}}}}$$

where $K_n$ is the current proportional speed gain,
$S_n$ is the current stabilization time,
$S_{\text{target}}$ is the target stabilization time, and
X is a constant.

4. The control device (10) according to one of claims 1 to 3, wherein the calculation unit (11) is adapted to initially determine the current proportional speed gain as a fixed initial proportional speed gain based on a user input (1).

5. The control device (10) according to one of claims 1 to 3, wherein the calculation unit (11) is adapted to initially determine the current proportional speed gain based on an inertia estimation of the servo motor (20).

6. The control device (10) according to one of claims 1 to 5, further comprising
a detection unit (14) configured to detect whether vibrations affect the servo motor (20) and/or the load and to send a signal to the servo motor (20) for eliminating the detected vibrations.

7. The control device (10) according to claim 6, wherein the detection unit (14) is configured to detect a vibration if a deviation of the motor speed between a motor speed command and a motor speed feedback is larger than a predetermined value.

8. The control device (10) according to claim 6 or 7, wherein the detection unit (14) is configured to detect a vibration if the occurrence number of the zero-cross for the deviation of motor speed is within a predetermined range.

9. The control device (10) according to one of claims 6 to 8, wherein the detection unit (14) is configured to compare the current proportional speed gain and the next proportional speed gain, and, if the current proportional speed gain is larger than the next proportional speed gain, to send a signal to the control unit (13) to generate the control signal based on the previous parameters in case of detected vibrations.

10. The control device (10) according to one of claims 6 to 9, wherein the detection unit (14) is configured to send a signal to the determination unit (12) to determine the next proportional speed gain after the detected vibrations are eliminated.

**11.** The control device (10) according to one of claims 1 to 10, configured to repeat the tuning iterations until the current stabilization time ($S_n$) is equal to or lower than the target stabilization time.

**12.** The control device (10) according to one of claims 1 to 11, wherein the determination unit (12) is configured to compare the next proportional speed gain of the one step gain determination process and the next proportional speed gain of the skip step gain determination process, and if the next proportional speed gain of the one step gain determination process is larger than the next proportional speed gain of the skip step gain determination process, the determination unit (12) is configured to use the next proportional speed gain of the one step gain determination process in the next tuning iteration.

**13.** The control device (10) according to one of claims 2 to 12, wherein the parameters are at least one of a proportional position gain, a velocity control gain, a torque command filter and a position command filter.

**14.** Method for tuning a servo motor (20) in a plurality of tuning iterations, the method comprising:

determining a current proportional speed gain ($K_n$), which is a proportional speed gain of a current tuning iteration of the servo motor (20),
calculating a stabilization time ratio based on a current stabilization time ($S_n$) of the servo motor (20) and a target stabilization time ($S_{target}$),
selecting a gain determination process based on the calculated stabilization time ratio,
determining a next proportional speed gain ($K_{n+1}$) using the selected gain determination process, the next proportional speed gain ($K_{n+1}$) being a proportional speed gain of the next tuning iteration following the current tuning iteration,
**characterized in that**
in the selecting step, a skip step gain determination process, in which the next proportional speed gain ($K_{n+1}$) is determined by a first calculation rule and the determined current proportional speed gain ($K_n$), wherein the first calculation rule is dependent on the calculated stabilization time ratio, is selected if the stabilization time ratio is equal to or greater than the predetermined reference value, and one step gain determination process, in which the next proportional speed gain ($K_{n+1}$) is determined by a second calculation rule and the determined current proportional speed gain ($K_n$), wherein the second calculation rule is independent of the calculated stabilization time ratio, is selected if the stabilization time ratio is below a predetermined reference value.

**15.** Computer program product comprising a program code for executing the method for tuning a servo motor (20) according to claim 14 when run on at least one computer.

**Patentansprüche**

**1.** Steuervorrichtung (10) zum Einstellen eines Servomotors (20) in mehreren Einstelliterationen, wobei die Steuervorrichtung (10) aufweist:

eine Berechnungseinheit (11), die eingerichtet ist, eine aktuelle proportionale Geschwindigkeitsverstärkung ($K_n$) zu bestimmen, welche eine proportionale Geschwindigkeitsverstärkung einer aktuellen Einstelliteration des Servomotors (20) ist, und ein Stabilisationszeitverhältnis anhand einer aktuellen Stabilisationszeit ($S_n$) des Servomotors (20) und einer Zielstabilisationszeit ($S_{target}$) zu berechnen,
eine Bestimmungseinheit (12), die eingerichtet ist, einen Verstärkung-Bestimmungsvorgang anhand des berechneten Stabilisationszeitverhältnisses auszuwählen und eine nächste proportionalen Geschwindigkeitsverstärkung ($K_{n+1}$) unter Verwendung des ausgewählten Verstärkung-Bestimmungsvorgang zu bestimmen, wobei die nächste proportionale Geschwindigkeitsverstärkung eine proportionale Geschwindigkeitsverstärkung der nächsten Einstelliteration ist, die auf die aktuelle Einstelliteration folgt,
**dadurch gekennzeichnet, dass**
die Bestimmungseinheit (12) eingerichtet ist:

einen Schrittüberspringungs-Verstärkungsbestimmungsvorgang auszuwählen, in welchem die nächste proportionale Geschwindigkeitsverstärkung durch eine erste Berechnungsregel und der bestimmten aktuellen proportionale Geschwindigkeitsverstärkung bestimmt wird, wobei die erste Berechnungsregel abhängig von dem berechneten Stabilisationszeitverhältnis ist, falls das Stabilisationszeitverhältnis gleich oder größer einem vorgegebener Referenzwert ist, und

13

einen Einzelschritt-Verstärkungsbestimmungsvorgang auszuwählen, in welchem die nächste proportionale Geschwindigkeitsverstärkung durch eine zweite Berechnungsregel und der bestimmten aktuellen proportionalen Geschwindigkeitsverstärkung bestimmt wird, wobei die zweite Berechnungsregel unabhängig von dem berechneten Stabilisationszeitverhältnis ist, falls das Stabilisationszeitverhältnis unterhalb des vorgegebenen Referenzwerts ist.

2. Steuervorrichtung (10) gemäß Anspruch 1, wobei die Berechnungseinheit (11) ferner eingerichtet ist, Parameter des Servomotors (20) gemäß der bestimmten nächsten proportionalen Geschwindigkeitsverstärkung zu aktualisieren, und
die Steuervorrichtung (10) ferner eine Steuereinheit (13) aufweist, die eingerichtet ist, ein Steuersignal (2) zum Steuern des Servomotors (20) zum Antreiben einer Last anhand der aktualisierten Parameter in der nächsten Einstelliteration zu erzeugen.

3. Steuervorrichtung (10) gemäß Anspruch 1 oder 2, wobei die Bestimmungseinheit (12) eingerichtet ist, die nächste proportionale Geschwindigkeitsverstärkung ($K_{n+1}$) bei dem Schrittüberspringungs-Verstärkungsbestimmungsvorgang zu bestimmen als:

$$K_{n+1} = K_n \times {}_{2\chi}\sqrt{\frac{S_n}{S_{target}}} \ ,$$

wobei $K_n$ die aktuelle proportionale Geschwindigkeitsverstärkung ist,
$S_n$ die aktuelle Stabilisationszeit ist,
$S_{target}$ die Zielstabilisationszeit ist, und
X eine Konstante ist.

4. Steuervorrichtung (10) gemäß einem der Ansprüche 1 bis 3, wobei die Berechnungseinheit (11) eingerichtet ist, zu Beginn die aktuelle proportionale Geschwindigkeitsverstärkung als eine fixierte anfängliche proportionale Geschwindigkeitsverstärkung anhand einer Benutzereingabe (1) zu bestimmen.

5. Steuervorrichtung (10) gemäß einem der Ansprüche 1 bis 3, wobei die Berechnungseinheit (11) eingerichtet ist, zu Beginn die aktuelle proportionale Geschwindigkeitsverstärkung anhand einer Trägheitsabschätzung des Servomotors (20) zu bestimmen.

6. Steuervorrichtung (10) gemäß einem der Ansprüche 1 bis 5, welche ferner aufweist:
eine Erfassungseinheit (14), die eingerichtet ist, zu erfassen, ob Vibrationen den Servomotor (20) und/oder die Last beeinflussen und ein Signal an den Servomotor (20) zum Eliminieren der erfassten Vibrationen zu senden.

7. Steuervorrichtung (10) gemäß Anspruch 6, wobei die Erfassungseinheit (14) eingerichtet ist, eine Vibration zu erfassen, falls eine Abweichung der Motorgeschwindigkeit zwischen einem Motorgeschwindigkeitsbefehl und einer Motorgeschwindigkeitsrückkopplung größer als ein vorgegebener Wert ist.

8. Steuervorrichtung (10) gemäß Anspruch 6 oder 7, wobei die Erfassungseinheit (14) eingerichtet ist, eine Vibration zu erfassen, falls die Anzahl eines Auftretens von Nulldurchgänge für die Abweichung der Motorgeschwindigkeit innerhalb eines vorgegebenen Bereichs ist.

9. Steuervorrichtung (10) gemäß einem der Ansprüche 6 bis 8, wobei die Erfassungseinheit (14) eingerichtet ist, die aktuelle proportionale Geschwindigkeitsverstärkung und die nächste proportionale Geschwindigkeitsverstärkung zu vergleichen und, falls die aktuelle proportionale Geschwindigkeitsverstärkung größer als die nächste proportionale Geschwindigkeitsverstärkung ist, ein Signal an die Steuereinheit (13) zu senden, um im Falle von erfassten Vibrationen das Steuersignal anhand der vorherigen Parameter zu erzeugen.

10. Steuervorrichtung (10) gemäß einem der Ansprüche 6 bis 9, wobei die Erfassungseinheit (14) eingerichtet ist, ein Signal an die Bestimmungseinheit (12) zu senden, um die nächste proportionale Geschwindigkeitsverstärkung, nachdem die erfassten Vibrationen eliminiert wurden, zu bestimmen.

11. Steuervorrichtung (10) gemäß einem der Ansprüche 1 bis 10, welche eingerichtet ist, die Einstelliterationen zu wiederholen, bis die aktuelle Stabilisationszeit ($S_n$) gleich oder geringer als die Zielstabilisationszeit ist.

12. Steuervorrichtung (10) gemäß einem der Ansprüche 1 bis 11, wobei die Bestimmungseinheit (12) eingerichtet ist, die nächste proportionale Geschwindigkeitsverstärkung des Einzelschritt-Verstärkungsbestimmungsvorgangs und die nächste proportionale Geschwindigkeitsverstärkung des Schrittüberspringungs-Verstärkungsbestimmungsvorgangs zu vergleichen, und falls die nächste proportionale Geschwindigkeitsverstärkung des Einzelschritt-Verstärkungsbestimmungsvorgangs größer als die nächste proportionale Geschwindigkeitsverstärkung des Schrittüberspringungs-Verstärkungsbestimmungsvorgangs ist, die Bestimmungseinheit (12) eingerichtet ist, die nächste proportionale Geschwindigkeitsverstärkung des Einzelschritt-Verstärkungsbestimmungsvorgangs in der nächsten Einstelliteration zu verwenden.

13. Steuervorrichtung (10) gemäß einem der Ansprüche 2 bis 12, wobei die Parameter zumindest eine von einer proportionalen Positionsverstärkung, eine Geschwindigkeitssteuerungsverstärkung, einen Drehmomentbefehlsfilter und einem Positionsbefehlsfilter ist.

14. Verfahren zum Einstellen eines Servomotors (20) in mehreren Einstelliterationen, wobei das Verfahren aufweist:

Bestimmen einer aktuellen proportionalen Geschwindigkeitsverstärkung ($K_n$), welche eine proportionale Geschwindigkeitsverstärkung einer aktuellen Einstelliteration des Servomotors (20) ist,
Berechnen eines Stabilisationszeitverhältnisses anhand einer aktuellen Stabilisationszeit ($S_n$) des Servomotors (20) und einer Zielstabilisationszeit ($S_{tar}$get),
Auswählen eines Verstärkungsbestimmungsvorgangs anhand des berechneten Stabilisationszeitverhältnisses,
Bestimmen einer nächsten proportionalen Geschwindigkeitsverstärkung ($K_{n+1}$) unter Verwendung des ausgewählten Verstärkungsbestimmungsvorgangs, wobei die nächste proportionale Geschwindigkeitsverstärkung ($K_{n+1}$) eine proportionale Geschwindigkeitsverstärkung der nächsten Einstelliteration ist, die auf die aktuelle Einstelliteration folgt,
**dadurch gekennzeichnet, dass**
in dem Auswahlschritt ein Schrittüberspringungs-Verstärkungsbestimmungsvorgang, in welchem die nächste proportionale Geschwindigkeitsverstärkung ($K_{n+1}$) durch eine erste Berechnungsregel und die bestimmte aktuelle proportionale Geschwindigkeitsverstärkung ($K_n$) bestimmt wird, wobei die erste Berechnungsregel abhängig von dem berechneten Stabilisationszeitverhältnis ist, ausgewählt wird, falls das Stabilisationszeitverhältnis gleich oder größer als ein vorgegebener Referenzwert ist, und ein Einzelschritt-Verstärkungsbestimmungsvorgang ausgewählt wird, in welchem die nächste proportionale Geschwindigkeitsverstärkung ($K_{n+1}$) durch eine zweite Berechnungsregel und die bestimmte aktuelle proportionale Geschwindigkeitsverstärkung ($K_n$) bestimmt wird, wobei die zweite Berechnungsregel unabhängig von dem berechneten Stabilisationszeitverhältnis ist, falls das Stabilisationszeitverhältnis unter einem vorgegebenen Referenzwert ist.

15. Computerprogrammprodukt, welches einen Programmcode zum Ausführen des Verfahrens zum Einstellen eines Servomotors (20) gemäß Anspruch 14, wenn es auf zumindest einem Computer ausgeführt wird, aufweist.

**Revendications**

1. Dispositif de commande (10) permettant de régler un servomoteur (20) en une pluralité d'itérations de réglage, le dispositif de commande (10) comprenant :

une unité de calcul (11) configurée pour déterminer un gain de vitesse proportionnel courant ($K_n$), qui est un gain de vitesse proportionnel d'une itération courante de réglage du servomoteur (20), et pour calculer un rapport temporel de stabilisation sur la base d'un temps de stabilisation courant ($S_n$) du servomoteur (20) et d'un temps de stabilisation cible ($S_{target}$),
une unité de détermination (12) configurée pour sélectionner un traitement de détermination de gain sur la base du rapport temporel de stabilisation calculé, et pour déterminer un gain de vitesse proportionnel suivant ($K_{n+1}$) au moyen du traitement de détermination de gain sélectionné, le gain de vitesse proportionnel suivant étant un gain de vitesse proportionnel de l'itération suivante de réglage qui intervient après l'itération courante de réglage,
**caractérisé en ce que**
l'unité de détermination (12) est configurée pour :

sélectionner un traitement de détermination de gain de pas de saut, durant lequel le gain de vitesse proportionnel suivant est déterminé par une première règle de calcul et par le gain de vitesse proportionnel courant déterminé, dans lequel la première règle de calcul dépend du rapport temporel de stabilisation calculé, si le rapport temporel de stabilisation est égal ou supérieur à une valeur de référence prédéterminée, et

sélectionner un traitement de détermination de gain d'un pas, durant lequel le gain de vitesse proportionnel suivant est déterminé par une seconde règle de calcul et par le gain de vitesse proportionnel courant déterminé, dans lequel la seconde règle de calcul ne dépend pas du rapport temporel de stabilisation calculé, si le rapport temporel de stabilisation est inférieur à la valeur de référence prédéterminée.

2. Dispositif de commande (10) selon la revendication 1, dans lequel l'unité de calcul (11) est en outre configurée pour mettre à jour des paramètres du servomoteur (20) conformément au gain de vitesse proportionnel suivant déterminé, et

le dispositif de commande (10) comprend en outre une unité de commande (13) configurée pour générer un signal de commande (2) destiné à commander le servomoteur (20) par rapport à l'entraînement d'une charge sur la base des paramètres mis à jour lors de l'itération suivante de réglage.

3. Dispositif de commande (10) selon la revendication 1 ou la revendication 2, dans lequel l'unité de détermination (12) est configurée pour déterminer le gain de vitesse proportionnel suivant ($K_{n+1}$) lors du traitement de détermination de gain de pas de saut tel que :

$$K_{n=1} = K_n \times \sqrt[2x]{\frac{S_n}{S_{target}}}$$

où $K_n$ est le gain de vitesse proportionnel courant,
$S_n$ est le temps de stabilisation courant,
$S_{target}$ est le temps de stabilisation cible, et où
X est une constante.

4. Dispositif de commande (10) selon l'une des revendications 1 à 3, dans lequel l'unité de calcul (11) est apte à déterminer initialement le gain de vitesse proportionnel courant en tant que gain de vitesse proportionnel initial fixe sur la base d'une entrée (1) d'utilisateur.

5. Dispositif de commande (10) selon l'une des revendications 1 à 3, dans lequel l'unité de calcul (11) est apte à déterminer initialement le gain de vitesse proportionnel courant sur la base d'une estimation d'inertie du servomoteur (20).

6. Dispositif de commande (10) selon l'une des revendications 1 à 5, comprenant en outre une unité de détection (14) configurée pour détecter si des vibrations affectent le servomoteur (20) et/ou la charge et pour envoyer un signal au servomoteur (20) d'élimination des vibrations détectées.

7. Dispositif de commande (10) selon la revendication 6, dans lequel l'unité de détection (14) est configurée pour détecter des vibrations si un écart de la vitesse de moteur entre une instruction de vitesse de moteur et une rétroaction de vitesse de moteur est supérieur à une valeur prédéterminée.

8. Dispositif de commande (10) selon la revendication 6 ou la revendication 7, dans lequel l'unité de détection (14) est configurée pour détecter des vibrations si le nombre d'occurrences du passage au zéro de l'écart de vitesse de moteur s'inscrit dans une plage prédéterminée.

9. Dispositif de commande (10) selon l'une des revendications 6 à 8, dans lequel l'unité de détection (14) est configurée pour comparer le gain de vitesse proportionnel courant et le gain de vitesse proportionnel suivant et, si le gain de vitesse proportionnel courant est supérieur au gain de vitesse proportionnel suivant, pour envoyer un signal à l'unité de commande (13) pour qu'elle génère le signal de commande sur la base des paramètres précédents dans un cas de vibrations détectées.

10. Dispositif de commande (10) selon l'une des revendications 6 à 9, dans lequel l'unité de détection (14) est configurée pour envoyer un signal à l'unité de détermination (12) pour qu'elle détermine le gain de vitesse proportionnel suivant après l'élimination des vibrations détectées.

11. Dispositif de commande (10) selon l'une des revendications 1 à 10, configuré pour répéter les itérations de réglage jusqu'à ce que le temps de stabilisation courant ($S_n$) soit égal ou inférieur au temps de stabilisation cible.

12. Dispositif de commande (10) selon l'une des revendications 1 à 11, dans lequel l'unité de détermination (12) est configurée pour comparer le gain de vitesse proportionnel suivant du traitement de détermination de gain d'un pas et le gain de vitesse proportionnel suivant du traitement de détermination de gain de pas de saut, et si le gain de vitesse proportionnel suivant du traitement de détermination de gain d'un pas est supérieur au gain de vitesse proportionnel suivant du traitement de détermination de gain de pas de saut, l'unité de détermination (12) est configurée pour utiliser le gain de vitesse proportionnel suivant du traitement de détermination de gain d'un pas lors de l'itération suivante de réglage.

13. Dispositif de commande (10) selon l'une quelconque des revendications 2 à 12, dans lequel les paramètres sont au moins l'un d'un gain de position proportionnel, d'un gain de commande vitesse, d'un filtre de commande de couple et d'un filtre de commande de position.

14. Procédé de réglage d'un servomoteur (20) en une pluralité d'itérations de réglage, le procédé consistant à :

déterminer un gain de vitesse proportionnel courant ($K_n$), qui est un gain de vitesse proportionnel d'une itération courante de réglage du servomoteur (20),
calculer un rapport temporel de stabilisation sur la base d'un temps de stabilisation courant ($S_n$) du servomoteur (20) et d'un temps de stabilisation cible (Starget),
sélectionner un traitement de détermination de gain sur la base du rapport temporel de stabilisation calculé,
déterminer un gain de vitesse proportionnel suivant ($K_{n+1}$) au moyen du traitement de détermination de gain sélectionné, le gain de vitesse proportionnel suivant ($K_{n+1}$) étant un gain de vitesse proportionnel de l'itération suivante de réglage qui intervient après l'itération courante de réglage,
**caractérisé en ce que**
à l'étape de sélection, un traitement de détermination de gain de pas de saut, durant lequel le gain de vitesse proportionnel suivant ($K_{n+1}$) est déterminé par une première règle de calcul et par le gain de vitesse proportionnel courant déterminé ($K_n$), dans lequel la première règle de calcul dépend du rapport temporel de stabilisation calculé, est sélectionné si le rapport temporel de stabilisation est égal ou supérieur à la valeur de référence prédéterminée, et un traitement de détermination de gain d'un pas, durant lequel le gain de vitesse proportionnel suivant ($K_{n+1}$) est déterminé par une seconde règle de calcul et par le gain de vitesse proportionnel courant ($K_n$), dans lequel la seconde règle de calcul ne dépend pas du rapport temporel de stabilisation calculé, est sélectionné si le rapport temporel de stabilisation est inférieur à une valeur de référence prédéterminée.

15. Produit programme informatique comprenant un code de programme permettant de mettre en oeuvre le procédé de réglage d'un servomoteur (20) selon la revendication 14 lorsqu'il est exécuté sur au moins un ordinateur.

FIG. 1

FIG. 2

FIG. 3

FIG. 4

FIG. 5

**REFERENCES CITED IN THE DESCRIPTION**

**Patent documents cited in the description**

- US 5153807 A

- US 5213077 A